# EUROPÄISCHE PATENTSCHRIFT

(11) **EP 2 092 224 B1**
(45) Veröffentlichungstag und Bekanntmachung des Hinweises auf die Patenterteilung: **20.03.2013**
(21) Anmeldenummer: 07822762.6
(22) Anmeldetag: 20.11.2007
(51) Int. Cl.: F16K 17/30

(54) **SICHERHEITSABSPERRVORRICHTUNG, NÄMLICH STRÖMUNGSWÄCHTER FÜR FLUIDE MEDIEN MIT EINEM, INSBESONDERE ROHRFÖRMIGEN GEHÄUSE**
SAFETY SHUT-OFF DEVICE, I.E. FLOW REGULATOR FOR FLUID MEDIA, COMPRISING A PARTICULARLY TUBULAR HOUSING
DISPOSITIF DE BLOCAGE DE SÉCURITÉ, NOTAMMENT CONTRÔLEUR D'ÉCOULEMENT POUR DES FLUIDES, COMPORTANT UN BOÎTIER NOTAMMENT TUBULAIRE

(30) Priorität: 23.11.2006 DE 102006055283; 12.07.2007 DE 102007032550
(43) Veröffentlichungstag der Anmeldung: 26.08.2009
(73) Patentinhaber: FITR-Gesellschaft für Innovation im Tief- und Rohrleitungsbau Weimar mbH, 99427 Weimar (DE); Forschungszentrum Jülich Gmbh, 52428 Jülich (DE); Technische Universität Ilmenau, 98693 Ilmenau (DE)
(72) Erfinder: BERGER, Wolfgang, 99425 Weimar (DE); BEER, Daniel G., 07589 Lindenkreuz (DE); ZENTNER, Lena, 98693 Ilmenau (DE); SCHNEIDER, Heike, U., 52428 Jülich (DE); SCHURR, Ulrich, 52428 Jülich (DE)
(74) Vertreter: Kruspig, Volkmar
(86) Internationale Anmeldenummer: PCT/EP2007/062594
(87) Internationale Veröffentlichungsnummer: WO 2008/061993

(56) Entgegenhaltungen:
- WO-A-87/01172
- WO-A-88/06694
- WO-A-90/08279
- DE-A1-102004 032 236
- FR-A- 2 726 063
- US-A- 3 441 052
- US-A- 5 613 518
- US-A- 5 921 271

## Beschreibung

Die Erfindung betrifft eine Sicherheitsabsperrvorrichtung, nämlich Strömungswächter für fluide Medien mit einem, insbesondere rohrförmigen, Gehäuse, einem im Gehäuseinneren gelagerten oder dort angeformten Ventilsitz sowie einem rotationssymmetrischen Ventilkörper, welcher bei Erreichen der Schließposition in Anlage mit einer Dichtfläche des Ventilsitzes gelangt, gemäß Oberbegriff des Patentanspruchs 1.

Zur Überwachung von Gasleitungen werden an sich bekannte Gasströmungswächter eingesetzt. Diese haben die Aufgabe, den Gasstrom zu unterbrechen, wenn ein vorgegebener Durchflussgrenzwert überschritten wird. Dieser Durchflussgrenzwert ist so hoch zu wählen, dass der Gasströmungswächter bei normalem Betrieb in einer offenen Position verbleibt.

Durch den Einsatz von Strömungswächtern in Hausanschlussleitungen und Inneninstallationen ist eine Sicherheitsmaßnahme zur Abwehr von unkontrollierten Ausströmungen, z.B. hervorgerufen durch Baggereingriff oder Manipulation, gegeben.

Die technischen Regeln beispielsweise für die Gasinstallation gemäß Arbeitsblatt G-600-B (12/03), Beiblatt zur TRGI 1986/1996, schreiben den Einbau von Strömungswächtern in Deutschland zwingend vor.

Gemäß dem bekannten Stand der Technik kommen konventionelle Gasströmungswächter zum Einsatz, bei denen ein Schließkörper mittig geführt wird. Als Durchflussquerschnitt zwischen Gehäuse und Schließkörper dient dabei ein Ringspalt.

Im Falle eines Schadens an der Hausanschlussleitung schließt ein verschieblicher Ventilkörper, der z.B. tellerförmig ausgebildet ist, entgegen einer Kraft einer Feder innerhalb von sehr kurzer Zeit selbsttätig den Ventilsitz. Auf diese Weise wird die Gaszufuhr gesperrt und es ist ein weiteres Ausströmen unmöglich. Verwiesen sei hier beispielsweise auf die WO 92/01184 A1 oder die WO 94/16255 A2.

Überwiegend wird bei den bekannten Strömungswächtern im Rohrquerschnitt ein Halteteil vorgesehen, das eine Führung aufweist, in der der Ventilkörper verschieblich gelagert ist. Weiterhin ist eine Feder vorgesehen, die den Ventilkörper entgegen der Strömungsrichtung in einer vom Ventilsitz abgehobene offene Stellung hält. Eine Überströmöffnung ist dafür notwendig, um nach dem Verschluss des Gasströmungswächters langsam einen Druckausgleich zu realisieren, so dass der Gasströmungswächter wieder geöffnet werden kann.

Dieses kurz erläuterte Grundprinzip wird von einer Vielzahl von Weiterentwicklungen modifiziert. So offenbaren die Druckschriften AT 413 750 B, DE 20 317 261 U1, DE 103 52 372, DE 103 51 041 B4 und DE 103 40 679 A1 Lösungen zur Vermeidung von Verschmutzungen z.B. der Überstromöffnung oder der Ventilfeder.

Bezüglich der gewünschten Dichtheit der Strömungswächter im Verschlussfall sei beispielsweise auf die DE 20 2004 015 378 U1 oder die DE 10 2004 041 499 B4 verwiesen.

In den Druckschriften DE 20 2004 009 544 U1, DE 10 2004 007 114 A1, DE 201 16 899 U1 oder 200 03 606 U1 werden Konstruktionen erläutert, um einen Gasströmungswächter von außen öffnen und/oder verschließen zu können, z.B. um nach einem Verschluss im Havariefall eine erneute Öffnung des Ventils zu realisieren.

Aus der DE 101 37 307 A1 ist ein Rohrbruchventil zum Absperren eines Rohrabschnitts vorbekannt. Die zur Betätigung der Armaturen ansonsten notwendigen Gestänge sind bei dieser Lösung nicht mehr notwendig. Vielmehr wird manuell das Ventil oder der Ventilkörper über eine elektromagnetische Spule bewegt, wobei die Spule mit einer Spannungsquelle verbindbar ist. Alternativ kann das dortige Ventil selbsttätig dann schließen, wenn der Volumenstrom in der Rohrleitung über einen bestimmten Grenzsatz ansteigt, wobei in diesem Fall der Schließkörper des Ventils in den Ventilsitz gedrückt wird.

Dieser vorbekannte zentrisch gelagerte Schließkörper bildet für den Elektromagneten den Anker. Der Ventilsitz selbst ist strömungsgünstig geformt, wobei ein O-Ring im Schließkörper für die Dichtheit im geschlossenen Zustand sorgt. Bei elektrischer Aktivierung der Spule wird der Schließkörper mit der Kraft des Elektromagneten quasi vertikal in den Ventilsitz gezogen. Bei der Schwerkraftfunktion schließt der Schließkörper dann, wenn seine Gewichtskraft kleiner ist als die sich aus der Strömung ergebene Schließkraft.

Eine ergänzende Ausführungsform gemäß DE 101 37 307 A1 geht von einem Schließkörper in Form einer Kugel ohne Führung aus. Die Kugel soll hier den Vorteil bilden, dass während des Schließvorgangs eine Drehbewegung ausgeführt wird, wodurch sich eventuell festsitzende Teile lösen können, so dass insgesamt sich die gewünschte Dichtfunktion ergibt.

Eine Funktionsprüfung von Rückhaltefedern bei Gasströmungswächtern mit der Möglichkeit des Nachjustierens ist z.B. in der DE 200 15 378 U1, der DE 102 02 067 B4 oder DE 102 02 067 A1 erläutert.

Eine Sicherheitsabsperrvorrichtung ist ebenfalls aus der Druckschift US 5 613 518 bekannt.

Allen bekannten Lösungen des Standes der Technik ist der Nachteil gemeinsam, dass die dort beschriebenen Gasströmungswächter aus einer Vielzahl von Einzelteilen bestehen, die nur mit großem Aufwand und sehr passgenau herzustellen sind, wobei ein weiterer Nachteil darin besteht, dass sich die gewünschte Funktionalität mit der Zeit vermindert und dass hinsichtlich der Einbaulage zwischen horizontal oder vertikal unterschieden werden muss.

Bekannte Schließmechanismen basieren grundsätzlich auf den Prinzipien einer in Rohrrichtung wirkenden Rückhaltefeder, die sich im Verschlusskörper in einem definierten Abstand zum Verschluss hält, wobei die Feder auf einer Führungsachse oder einem Führungsstab befindlich ist, um über Arretierungspunkte die notwendige Federvorspannkraft aufzubauen. Bei dem weiteren Prinzip, den Verschlusskörper durch die Schwerkraft in einem definierten Abstand zum Verschluss zu halten, ist ein Betrieb der Vorrichtung nur in definierter, im Regelfall horizontaler Lage möglich.

Aus dem Vorgenannten ist es daher Aufgabe der Erfindung, eine weiterentwickelte Sicherheitsabsperrvorrichtung, nämlich einen Strömungswächter für fluide Medien anzugeben, der aus möglichst wenig Teilen besteht, welcher sowohl horizontal als auch vertikal eingebaut werden kann und dessen Funktion auch über eine lange Betriebszeit erhalten bleibt.

Die Lösung der Aufgabe der Erfindung erfolgt durch eine Sicherheitsabsperrvorrichtung gemäß der Merkmalskombination nach Patentanspruch 1, wobei die Unteransprüche mindestens zweckmäßige Ausgestaltungen und Weiterbildungen darstellen.

Erfindungsgemäß besitzt der Ventilkörper entweder die Form eines an sich sehr einfach gestaltbaren, flachen Deckels oder die Gestalt einer Spindel mit annähernder Hüllkurve, die derjenigen eines schwimmenden Pinguins entspricht. Der Ventilkörper ist im Gehäuse längsverschieblich gelagert, und zwar über an der Gehäusewandung, insbesondere der Gehäuseinnenwandung, fixierte, elastische Aufhängungsmittel.

Dabei ist der Ventilkörper entgegen der Kraft der als Blatt- oder Biegefeder ausgebildeten Aufhängung längsverchieblich.

Ergänzend besteht die Möglichkeit, dass die elastische Aufhängung über ein Justiermittel hinsichtlich ihres Verschiebewegs einstellbar ist. Das oder die Justiermittel können als Stellschraube, und zwar im Sinne einer Wegbegrenzung ausgebildet werden.

Die elastische Aufhängung besteht aus mehreren Biegefederbändern, welche den Ventilkörper umfangsseitig bezogen auf das Gehäuse an verschiedenen Punkten, z.B. drei Punkten, die um 120° versetzt sind, lagern.

Die Biegefederbänder besitzen im Einbauzustand eine U-Form, wobei ein erster U-Schenkel am Gehäuse und ein zweiter U-Schenkel am Ventilkörper befestigt ist. Diese Biegefederbänder, die z.B. aus einem Kunststoff-Foliengelenk bestehen können, halten zum einen den Ventilkörper in seiner Offenposition und gestatten es, unter Überwindung der vorhandenen Bandelastizität bei starkem Strömungsanstieg, den Ventilkörper in den Ventilsitz hinein zu bewegen. Damit ist die Lageveränderung des Ventilkörpers reibungsfrei, allein durch die Verformung der Aufhängung, z.B. der Biegefederbänder möglich.

Die pinguingestaltete Spindel besteht aus einem entgegen der Strömungsrichtung orientieren spitz zulaufenden Bereich, der in einen konvexen, bauchigen Mittelbereich übergeht, an den sich ein ebenfalls spitz zulaufender zweiter Bereich anschließt. Bei einer bevorzugten Ausführungsform ist der Spitzwinkel des zweiten Bereichs größer als derjenige des ersten Bereichs.

In der Schließposition kommt der konvexe, bauchige Mittelbereich in Kontakt mit dem Ventilsitz.

Der Ventilsitz kann einen ring-, pyramidenförmigen oder gaußkurvenförmigen Querschnitt aufweisen, wobei insbesondere der pyramidenförmige oder der gaußkurvenförmige Querschnitt bezogen auf den Strömungswiderstand optimiert ist.

Der Ventilsitz besteht aus einem elastischen, weichen Material oder weist eine dementsprechende Oberflächenbeschichtung auf.

Die strömungsrelevante Oberfläche der Spindel kann eine Strukturierung aufweisen, und zwar in Form abwechselnder hoch- oder tiefliegender oder konkav-konvex wechselnder Abschnitte. Die Strukturierung kann linienförmig, aber auch punktförmig ausgebildet werden und es können die Strukturierungsbereiche quaderförmige Erhebungen, Pyramiden, Pyramidenstümpfe, Kugelsegmente, Kreiszylinder und/oder Kreiskugeln umfassen.

Durch die Ausführungsform der Erfindung ist sichergestellt, dass der Ventilkörper nur zwei eindeutige Zustände einnimmt. Es kann hier entweder das Ventilkörperelement vollständig geöffnet oder geschlossen sein. Die Ausführungsform der elastischen Aufhängung sichert die Möglichkeit, große Verformungen und damit Bewegungen des Ventilkörpers zuzulassen, und zwar ohne dass zu große Spannungskräfte auftreten, die womöglich zu einem ungeeigneten Ansprechverhalten des Ventil- bzw. Schließkörpers führen.

Die Erfindung soll nachstehend anhand eines Ausführungsbeispiels sowie unter Zuhilfenahme von Figuren näher erläutert werden.

Hierbei zeigen:
- Fig. 1: einen Längsschnitt und einen Querschnitt einer ersten Ausführungsform der Erfindung mit einem Ventilkörper in Form eines Deckels;
- Fig. 2: einen Längsschnitt und einen Querschnitt einer zweiten Ausführungsform der Erfindung mit einem Ventilkörper in Form einer Spindel mit annähernden Gestalt eines schwimmenden Pinguins und
- Fig. 3: eine Darstellung, wie sich die approximierte Hüllkurve und Umfangsgestalt der Spindel aus einem biologischen Vorbild ergibt.

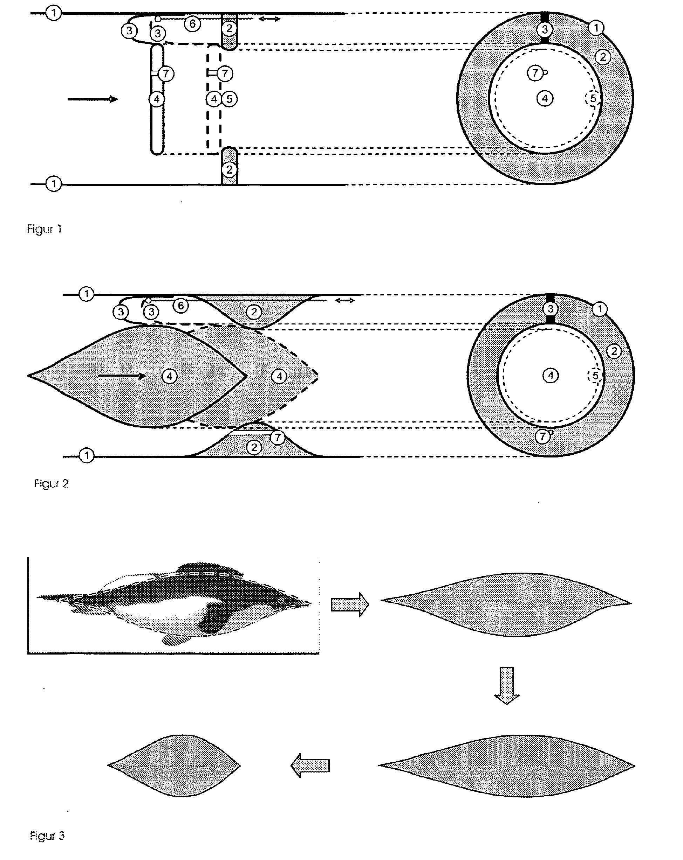

Die in den Fig. 1 und 2 gezeigte Sicherheitsabsperrvorrichtung als Strömungswächter befindet sich in einem Gehäuse, z.B. einem Rohrleitungsstück 1, und umfasst einen Ventilsitz 2, der eine Querschnittseinengung des rohrförmigen Gehäuses 1 bewirkt.

Weiterhin ist eine elastische Aufhängung 3 für den Verschlusskörper 4 (Fig. 2) bzw. den Verschlussdeckel 4 (Fig. 1) vorgesehen, der bei Überschreiten des Schließdurchflusses die vom Ventilsitz 2 gebildete Durchlassöffnung 5 verschließt.

Die elastische Aufhängung 3 ist durch eine Justierschraube 6 einstellbar.

Eine Überstromöffnung 7 ist entweder im Ventilsitz 2 (Fig. 2) oder dem Verschlusskörper oder -deckel 4 (Fig. 1) vorgesehen.

Der Ventilsitz 2 kann gemäß der Darstellung nach Fig. 1 als einfacher Ring ausgeführt werden, um die Strömungsverluste möglichst klein zu halten.

Es besteht aber auch alternativ die Möglichkeit, den Ventilsitz sinusförmig oder ähnlich konkav / konvex abwechselnd auszugestalten bzw. diesen mit einem gaußkurvenförmigen Querschnitt auszubilden.

Der Ventilsitz sollte ausreichend nachgiebig, z.B. aus einem elastischen Material bestehen oder mit einer entsprechenden Beschichtung versehen sein, damit sich der Verschlusskörper bzw. -deckel 4 beim Erreichen des Schließdurchflusses in den Ventilsitz hinein drückt und abdichtet.

Wie aus den Darstellungen nach Fig. 1 und 2 ersichtlich, wird der Verschlusskörper bzw. -deckel 4 durch mindestens eine elastische Aufhängung 3 in seiner Offenstellung gehalten, bis der Schließdurchfluss erreicht wird.

Die elastische Aufhängung 3 ist so ausgebildet, dass bei Erreichen des Schließdurchflusses ein ausreichend großer Weg zurückgelegt werden kann, damit sich der Verschlusskörper oder Verschlussdeckel 4 zum Ventilsitz 2 hin bewegt. Dies ist bevorzugt durch eine stark gekrümmte Form der Aufhängung, und zwar durch ein Biegefederband möglich, das im Einbauzustand eine U-Form aufweist, wobei ein erster U-Schenkel am Gehäuse und ein zweiter U-Schenkel am Ventilkörper 4 fixiert wird.

Der als einfacher Deckel oder als strömungstechnisch optimierte Spindel ausgeführte Verschlusskörper 4 soll nur über eine sehr geringe Masse verfügen, so dass kein wesentlicher Unterschied zwischen horizontaler und vertikaler Einbaulage zu verzeichnen ist.

Beim gezeigten Beispiel ist nur eine Aufhängung 3 vorhanden. Es können jedoch auch mehrere Aufhängungen vorgesehen sein, beispielsweise zwei gegenüberliegende Aufhängungen 3 oder jeweils um 120° versetzte Aufhängungen.

Wie aus der Zusammenschau der Fig. 2 und 3 ersichtlich, besteht die Pinguingestalt der Spindel aus einem entgegen der Strömungsrichtung gerichteten spitz zulaufenden ersten Bereich, der in einen konvexen, bauchigen Mittelbereich übergeht. Am Mittelbereich schließt sich ein ebenfalls spitz zulaufender zweiter Bereich an. Bei einer Ausführungsform kann der Spitzwinkel des zweiten Bereichs größer als derjenige des ersten Bereichs ausgeführt werden.

In der Schließposition gelangt der konvexe, bauchige Mittelbereich in Kontakt mit dem Ventilsitz 2.

Aus den dargestellten Beispielen ist ersichtlich, dass die elastische Aufhängung nicht nach dem bekannten Prinzip der Longitudinalfeder oder der Schwerkraft offen hält, sondern dass dies über ausreichend große Verformungs- oder Verbiegungsbewegungen der elastischen Aufhängung 3 erfolgt.

Die recht einfach ausführbaren Aufhängungen, z.B. in Form eines Foliengelenks, ändern ihr Verhalten über die Lebensdauer des Strömungswächters nicht wesentlich, so dass die gewünschte Langzeitfunktion sichergestellt ist.

Der Verschlusskörper bzw. Verschlussdeckel 4 kann an der elastischen Aufhängung 3 beweglich gelagert werden, so dass dieser in einfacher Weise auf den Ventilsitz klappen kann.

Die Durchlassöffnung 5 weist von ihrer Gestalt eine vergleichbare Fläche auf wie die vom Ventilsitz 2 in Anströmrichtung gebildete Fläche oder der diesbezügliche Flächenabschnitt.

Über die Justierschraube 6 können die Verschlusseigenschaften der Absperrvorrichtung beeinflusst werden, um z.B. den Schließdurchflussgrenzwert anzupassen.

## Patentansprüche

1. Sicherheitsabsperrvorrichtung, nämlich Strömungswächter für fluide Medien mit einem, insbesondere rohrförmigen, Gehäuse (1), einem im Gehäuseinneren gelagerten oder dort angeformten Ventilsitz (2) sowie einem rotationssymmetrischen Ventilkörper (4), welcher bei Erreichen der Schließposition in Anlage mit einer Dichtfläche des Ventilsitzes (2) gelangt, wobei der Ventilkörper (4) die Form eines flachen Deckels oder die Gestalt mit annähernden Hüllkurve aufweist und der Ventilkörper (4) im Gehäuse (1) längsverschieblich gelagert ist,
**dadurch gekennzeichnet, dass**
der Ventilkörper (4) über eine an der Gehäusewandung fixierte elastische Aufhängung (3) reibungsfrei entgegen der Kraft der als Biegefeder oder Foliengelenk ausgebildeten Aufhängung (3) längsverschieblich gelagert ist, wobei die elastische Aufhängung (3) mehrere Biegefederbänder umfasst, welche den Ventilkörper umfangsseitig bezogen auf das Gehäuse an verschiedenen Punkten lagern.

2. Sicherheitsabsperrvorrichtung nach Anspruch 1,
**dadurch gekennzeichnet, dass**
der Ventilsitz (2) einen ring-, pyramidenförmigen oder gaußkurvenförmigen Querschnitt aufweist.

3. Sicherheitsabsperrvorrichtung nach einem der vorangegangenen Ansprüche,
**dadurch gekennzeichnet, dass**
der Ventilsitz (2) aus einem elastischen, weichen Material besteht oder eine derartige Oberflächenbeschichtung aufweist.

4. Sicherheitsabsperrvorrichtung nach einem der vorangegangenen Ansprüche,
**dadurch gekennzeichnet, dass**
die strömungsrelevante Oberfläche der Spindel eine Strukturierung aufweist.

5. Sicherheitsabsperrvorrichtung nach einem der vorangegangenen Ansprüche,
**dadurch gekennzeichnet, dass**
die elastische Aufhängung (3) über ein Justiermittel (6) hinsichtlich ihres Verschiebewegs einstellbar ist.

6. Sicherheitsabsperrvorrichtung nach Anspruch 5,
**dadurch gekennzeichnet, dass**
das Justiermittel als Stellschraube (6) ausgebildet ist.

7. Sicherheitsabsperrvorrichtung nach Anspruch 1,
**dadurch gekennzeichnet, dass**
die Biegefederbänder im Einbauzustand eine U-Form aufweisen, wobei ein erster U-Schenkel am Gehäuse und ein zweiter U-Schenkel am Ventilkörper befestigt ist.

8. Sicherheitsabsperrvorrichtung nach Anspruch 7,
**dadurch gekennzeichnet, dass**
im Deckel eine Überströmdurchgangsöffnung vorgesehen ist.

9. Sicherheitsabsperrvorrichtung nach einem der vorangegangenen Ansprüche,
**dadurch gekennzeichnet, dass**
der Ventilsitz mindestens einen Überströmkanal aufweist.

10. Sicherheitsabsperrvorrichtung nach einem der vorangegangenen Ansprüche,
**dadurch gekennzeichnet, dass**
der Ventilkörper in seiner längsverschieblichen, reibungsfreien Lagerung zwei eindeutige Zustände, nämlich vollständig geöffnet oder geschlossen, einnimmt.

## Claims

1. Safety shut-off device, namely a flow controller for fluid media, comprising an in particular tubular housing (1), a valve seat (2) which is mounted inside or formed integrally in the housing, and a rotationally symmetrical valve body (4) which comes into contact with a sealing surface of the valve seat (2) when the closed position is adopted, wherein the valve body (4) has the shape of a flat lid or the shape of a spindle with an approximate envelope and the valve body (4) is mounted in the housing (1) to be longitudinally displaceable,
**characterized in that**
the valve body (4) is mounted to be longitudinally displaceable by an elastic suspension (3) fixed to the housing wall, without friction against the force of the suspension (3) in the form of a flexible spring or film joint, the elastic suspension (3) comprising several flexible spring bands which support the valve body circumferentially relative to the housing at different points.

2. Safety shut-off device according to claim 1,
**characterized in that**
the valve seat (2) has a cross-section in the form of a ring, a pyramid or a Gaussian curve.

3. Safety shut-off device according to one of the preceding claims,
**characterized in that**
the valve seat (2) is made of an elastic soft material or has a surface coating of this type.

4. Safety shut-off device according to one of the preceding claims,
**characterized in that**
the flow-relevant surface of the spindle is structured.

5. Safety shut-off device according to one of the preceding claims,
**characterized in that**
the elastic suspension (3) is adjustable with respect to its displacement path by an adjusting means (6).

6. Safety shut-off device according to claim 5,
**characterized in that**
the adjusting means is formed as an adjusting screw (6).

7. Safety shut-off device according to claim 1,
**characterized in that**
the flexible spring bands are U-shaped in the assembled state, wherein a first U-leg is fixed to the housing and a second U-leg is fixed to the valve body.

8. Safety shut-off device according to claim 7,
**characterized in that**
an overflow through hole is provided in the lid.

9. Safety shut-off device according to one of the preceding claims,
**characterized in that**
the valve seat comprises at least one overflow channel.

10. Safety shut-off device according to one of the preceding claims,
**characterized in that**
the valve body adopts two definite states in its longitudinally displaceable, frictionlessly mounted position, namely fully opened or closed.

## Revendications

1. Dispositif de fermeture de sécurité, à savoir dispositif de surveillance d'écoulement pour des milieux fluides, comprenant un boîtier (1) en particulier tubulaire, un siège de valve (2) monté à l'intérieur du boîtier ou conformé dans celui-ci, ainsi qu'un corps de valve (4) à symétrie de révolution qui, lorsqu'il atteint la position de fermeture, vient en contact avec une surface d'étanchement du siège de valve (2), dans lequel le corps de valve (4) présente la forme d'un couvercle plat ou la conformation d'une broche avec une courbe enveloppe approximative, et le corps de valve (4) est monté avec possibilité de translation longitudinale dans le boîtier (1),
**caractérisé en ce que**
le corps de valve (4) est monté avec possibilité de translation longitudinale, via une suspension élastique (3) fixée sur la paroi du boîtier, en l'absence de friction à l'encontre de la force de la suspension (3) réalisée sous forme de ressort à flexion ou d'articulation en film, et la suspension élastique (3) comprend plusieurs bandes de ressorts à flexion, qui supportent le corps de valve en des points différents sur la périphérie par référence au boîtier.

2. Dispositif de fermeture de sécurité selon la revendication 1,
**caractérisé en ce que** le siège de valve (2) présente une section transversale de forme annulaire, de forme pyramidale, ou avec une forme en courbe de Gauss.

3. Dispositif de fermeture de sécurité selon l'une des revendications précédentes,
**caractérisé en ce que** le siège de valve (2) est en un matériau élastique souple, ou comporte un revêtement de surface de ce type.

4. Dispositif de fermeture de sécurité selon l'une des revendications précédentes,
**caractérisé en ce que** la surface de la broche pertinente vis-à-vis des écoulements présente une structure.

5. Dispositif de fermeture de sécurité selon l'une des revendications précédentes,
**caractérisé en ce que** la suspension élastique (3) est réglable pour ce qui concerne son trajet de translation via un moyen d'ajustement (6).

6. Dispositif de fermeture de sécurité selon la revendication 5,
**caractérisé en ce que** le moyen d'ajustement est réalisé sous forme de vis de réglage (6).

7. Dispositif de fermeture de sécurité selon la revendication 1,
**caractérisé en ce que** les bandes de ressorts à flexion présentent, dans l'état monté, une forme en U, dans laquelle une première branche du U est fixée sur le boîtier et une seconde branche du U est fixée sur le corps de valve.

8. Dispositif de fermeture de sécurité selon la revendication 7,
**caractérisé en ce qu'**une ouverture traversante de déversement est prévue dans le couvercle.

9. Dispositif de fermeture de sécurité selon l'une des revendications précédentes,
**caractérisé en ce que** le siège de valve comporte au moins un canal de déversement.

10. Dispositif de fermeture de sécurité selon l'une des revendications précédentes,
**caractérisé en ce que** le corps de valve occupe dans son montage en translation longitudinale dépourvu de friction deux états univoques, à savoir un état complètement ouvert ou un état complètement fermé.
